# EUROPEAN PATENT SPECIFICATION

(11) **EP 0 537 967 B1**
(45) Date of publication and mention of the grant of the patent: **15.05.1996**
(21) Application number: 92309281.1
(22) Date of filing: 12.10.1992
(51) Int. Cl.: F16B 19/10, F16B 37/06

(54) **A headed stud**
Mit Kopf versehener Zapfen
Goujon muni de tête

(30) Priority: 18.10.1991 GB 9122133
(43) Date of publication of application: 21.04.1993
(73) Proprietor: FORD MOTOR COMPANY LIMITED, Brentwood, Essex CM13 3BW (GB); FORD FRANCE S. A., F-92506 Rueil-Malmaison Cédex (FR); FORD-WERKE AKTIENGESELLSCHAFT, D-50725 Köln (DE)
(72) Inventor: Bevan, John, Chelmsford, Essex CM3 5TG (GB)
(74) Representative: Messulam, Alec Moses

(56) References cited:
- FR-A- 1 406 174
- FR-A- 2 386 719
- GB-A- 0 854 830
- GB-A- 0 931 839
- GB-A- 2 054 082

## Description

This invention relates to a headed stud which includes means by which it can be secured directly to another component, by a riveting mechanism.

It is known to use a rivet to secure together two components. Typically each component has a hole through it, and a rivet is passed through both holes and then set to pull the two parts together and to hold them there. One known type of riveting is so called blind riveting, and one particular type of blind riveting is pull-type blind riveting where the rivet is hollow and a mandrel with a head passes through the rivet. A mandrel stem on the opposite side of the rivet to the head is grasped to pull the head into the rivet, thus expanding and setting the rivet.

It has been proposed in British patent number 854 830 to construct a fastener from a one piece tough resilient synthetic resin such as nylon. The fastener comprises a shank and a head which is of greater external dimensions than the shank so that the shank may be passed through a hole in a workpiece, and the head will not pass through the hole. The head and shank are hollow, with the shank having a smooth bore. In use, the part of the shank which is adjacent to the hole has a thin wall. By passing a screw through the head and driving the screw into the shank, the shank is drawn towards the workpiece causing the thin wall to fold and prevent the fastener being withdrawn from the hole while the screw is in the shank. The hole, and the part of the shank which is disposed in the hole, is non-circular so that the fastener resists rotation when the screw is driven in.

A problem with the above fastener is that its ability to bear load is limited by its construction of a resin material. The fastener would not work if made of metal, because the screw either would not cut the metal properly, or because the force required to insert the screw would be too great for convenient operation.

The present invention provides a stud as defined in Claim 1.

By use of this invention, the stud and the rivet which fastens the stud are integrated into a single piece.

By combining a stud with a non-circular shape (eg square or rectangular) with a correspondingly shaped hole, it can be ensured that the stud will not rotate relative to the surface to which it is secured.

The setting mandrel preferably is designed so that part of the mandrel stem breaks off when the rivet is set, and the mandrel head is retained in the rivet.

The mandrel may have a head which has a non-circular external cross-sectional shape.

The invention will now be further described, by way of example, with reference to the accompanying drawings, in which:
Figure 1 is a perspective view of a stud in accordance with the invention, in combination with part of an article to which the stud is to be secured;
Figure 2 is a side view of the stud in place in the article;
Figure 3 is a view corresponding to Figure 2 but showing the stud secured in place.

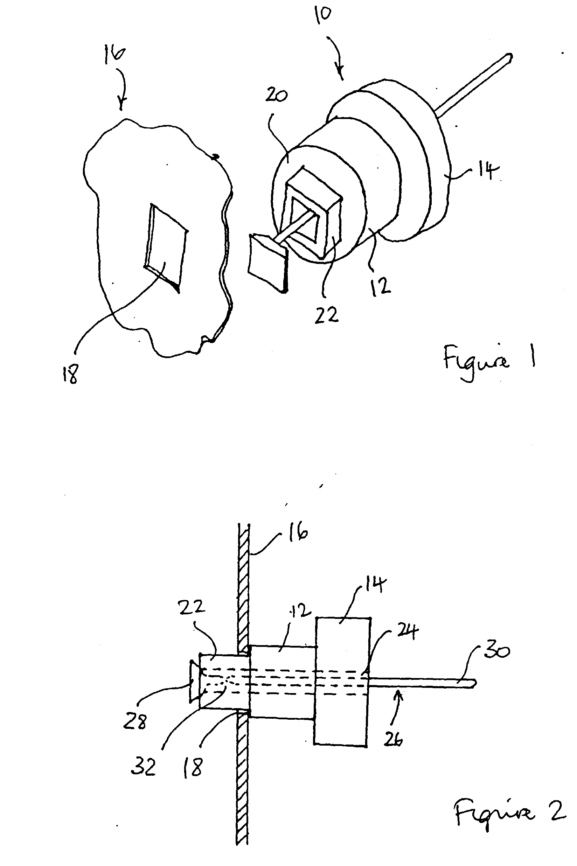

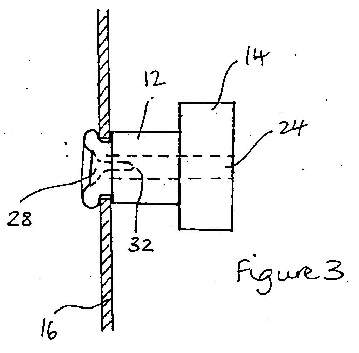

Figure 1 shows a mushroom shaped stud 10 having a shank 12 and a head 14. The stud is intended to be secured to a sheet metal panel 16 which has a square hole 18 formed in it, An end face 20 of the shank 12 is intended to abut against the surface of the panel 16, and has a squared projection 22 extending from the face. The dimensions of the projection 22 are such as to allow it to pass through the opening 18, as can be seen in Figure 2. The projection 22 will be a snug fit in the opening 18, so that when inserted the stud 10 cannot be rotated relative to the panel.

The stud has a central through bore 24, and a mandrel 26 passes through this bore. The mandrel has a head 28 and a stem 30, with a neck 32 on the stem 30.

Figure 1 shows the mandrel head 28 as being of generally square shape, but the invention can also operate with a generally round head.

The stud is secured by pulling on the mandrel stem 30 whilst exerting a force on the head 14 of the stud to hold the head against the plate 16. As is known for pull-type blind riveting assemblies, the mandrel head 28 is pulled into the squared projection 22 and causes this to splay outwards over the rear surface of the plate 16. The position shown in Figure 3 is then reached where the rivet portion 22 of the stud has been set into the hole in the plate and the stud is then secured. At a certain tension level in the mandrel 30, the mandrel snaps at the reduced diameter neck 32. The mandrel head is trapped in the rivet portion, and the stem 30 is discarded.

The action of setting the rivet will also cause any play between the squared rivet portion 22 and the edges of the hole 18 to be taken up.

The mandrel head 28 can be constructed in a known manner, for example as shown in GB-A-2 054 082, so that the rivet portion 22 is split into uniform petals which engage with the rear side of the plate 16.

The fixed stud 10 can be used to support, for example, a bumper bar on the bodywork of a motor vehicle. The stud however could be non symmetrical in which case the features of the invention which result in the prevention of rotation will be of particular significance.

## Claims

1. A headed stud which includes a rivet portion (22) formed integrally with the stud, the rivet portion having a non-circular external shape, and means (30) for setting the rivet portion, the stud comprising a head (14) which is spaced from the rivet portion by a shank (12) of greater external dimensions than the rivet portion, characterised in that the head (14), the shank (12) and the rivet portion (22) are all metal of a grade which is conventionally used for pull-type blind rivet assemblies, and in that the rivet portion is of a pull-type blind rivet assembly, and the means for setting the rivet portion comprises a setting mandrel (30) passing through the rivet portion (22).

2. A stud as claimed in Claim 1, wherein the rivet portion (22) has a square or rectangular external shape.

3. A stud as claimed in Claim 1 or Claim 2, wherein the mandrel (30) has a head (28) which has a non-circular external cross-sectional shape.

## Patentansprüche

1. Ein Stift oder Zapfen mit Kopf, der eine Nietenpartie (22) enthält, die in den Stift oder Zapfen integriert ist, wobei die Nietenpartie eine nicht kreisförmige äussere Form hat, sowie ein Mittel (30), um die Nietenpartie zu fixieren, wobei der Stift oder Zapfen einen Kopf (14) hat, der von der Nietenpartie durch einen Schaft (12) mit grössereren äusseren Abmessungen als die der Nietenpartie, entfernt ist, dadurch gekennzeichnet, dass der Kopf (14), der Schaft (12) und die Nietenpartie (22) alle aus Metall sind, dessen Qualität herkömmlicherweise für Zugtyp- Blind-Nietenmontagen verwendet wird und dass die Nietenpartie vom Zugtyp Blind-Nietenmontagen ist und dass das Fixiermittel für die Nietenpartie einen Fixierdorn (30) enthält, der durch die Nietenpartie (22) geht.

2. Ein Stift oder Zapfen nach Anspruch 1, in dem die Nietenpartie (22) eine quadratische oder rechteckige äussere Form hat.

3. Ein Stift oder Zapfen nach Anspruch 1 oder 2, in dem der Dorn (30) einen Kopf (28) hat, der eine nicht kreisförmige äussere Querschnittsform hat.

## Revendications

1. Goujon ou crampon à tête qui comprend une partie de rivet (22) formée de façon intégrale avec le crampon, la partie de rivet présentant une forme extérieure non circulaire, et des moyens (30) pour mater la partie de rivet, le crampon comprenant une tête (14) qui est espacée de la partie de rivet par un fût (12) de dimensions extérieures supérieures à celles de la partie de rivet, caractérisé en ce que la tête (14), le fût (12) et la partie de rivet (22) sont faits d'un métal d'une nuance que l'on utilise habituellement pour les assemblages par rivets aveugles du type à tirer, et en ce que la partie de rivet est du type assemblage par rivet aveugle à tirer, et en ce que les moyens de matage de la partie de rivet comprennent un mandrin de matage (30) passant au travers de la partie de rivet (22).

2. Crampon selon la revendication 1, dans lequel la partie de rivet (22) est de forme extérieure carrée ou rectangulaire.

3. Crampon selon la revendication 1 ou la revendication 2, dans lequel le mandrin (30) comporte une tête (28) qui présente une forme extérieure en section transversale non circulaire.
